# EUROPÄISCHE PATENTSCHRIFT

(11) **EP 1 683 840 B1**
(45) Veröffentlichungstag und Bekanntmachung des Hinweises auf die Patenterteilung: **08.04.2020**
(21) Anmeldenummer: 06000443.9
(22) Anmeldetag: 11.01.2006
(51) Int. Cl.: C09C 1/24, C01G 49/00, C03C 1/04

(54) **Reduktionsstabile Zinkferrit-Farbpigmente, Verfahren zu ihrer Herstellung sowie deren Verwendung**
Zinc-ferrit pigments stable against reduction, method for making and use of said pigments
Pigment de ferrites de zinc stables a la reduction, préparation et utilisation des pigments

(30) Priorität: 25.01.2005 DE 102005003356
(43) Veröffentlichungstag der Anmeldung: 26.07.2006
(73) Patentinhaber: LANXESS Deutschland GmbH, 50569 Köln (DE)
(72) Erfinder: Rosenhahn, Carsten, Dr., 47799 Krefeld (DE); Kräuter, Udo, Dr., 51375 Leverkusen (DE); König, Ralf-Gerhard, Dipl.-Ing., 40227 Düsseldorf (DE)

(56) Entgegenhaltungen:
- EP-A- 0 154 919
- EP-A- 0 345 578
- EP-A- 1 526 160
- DE-A1- 19 642 534
- GB-A- 1 071 611
- GB-A- 1 226 594
- US-A- 2 734 034

## Beschreibung

Die vorliegende Erfindung betrifft Zinkferrit-Farbpigmente, ein Verfahren zu ihrer Herstellung sowie deren Verwendung. Sie betrifft insbesondere helle, gelbe Zinkferrit-Farbpigmente mit verbesserter Reduktionsstabilität.

Zinkferrit-Pigmente werden für technische Verwendungen eingesetzt.

Je nach stöchiometrischer Zusammensetzung, Zusatzstoffen, Teilchengrößen, Kristallform und Oberflächeneigenschaften kann das im Spinellgitter kristallisierende Zinkferrit als Ausgangsmaterial für Weichmagnete, als Korrosionsschutz oder als Farbpigment eingesetzt werden.

Als "Tan"-Pigmente sind nicht ferrimagnetische Farbpigmente im angelsächsischen Sprachraum bekannt geworden.

In US 3,832,455 A1 ist die Herstellung der Zinkferrit-Pigmente beschrieben. Eine Fällung von Eisenoxidhydroxid aus Eisen(II)-sulfatlösung auf Zinkoxid oder Zinkcarbonat bei pH-Werten von 5 bis 6 und Temperaturen von 49 bis 52 °C wird filtriert, die Feststoffe gewaschen, getrocknet und geglüht.

Nach US 2,904,395 A1 werden die Zinkferrit-Pigmente entweder durch gemeinsame Fällung aus den entsprechenden eisen- und zinkhaltigen Lösungen mit anschließendem Filtrieren, Waschen, Trocknen und Glühen oder auch durch Glühen einer in wässriger Suspension gewonnenen innigen Mischung aus Eisenoxidhydroxid und Zinkoxid hergestellt. Die Glühung erfolgt bei Temperaturen bis zu 1.000 °C unter Zusatz von Katalysatoren, beispielsweise Salzsäure oder Zinkchlorid.

US 4,222,790 A1 beschreibt, dass der Glühprozess zur Herstellung von Zink- oder Magnesiumferrit verbessert werden kann, wenn der Mischung Alkalimetallsilikat zugesetzt wird. Als Flockungsmittel für die Filtration kann Aluminiumsulfat zugegeben werden.

Die Zugabe von Al₂O₃ und P₂O₅ bildende Verbindungen bei der Kalzinierung von chloridfreien farbreinen Zinkferritpigmenten wird in DE 31 36 279 A1 beschrieben.

Zinkferrit-Pigmente werden auch als Farbpigmente für die Farbindustrie eingesetzt.

Farbreine Zinkferrit-Farbpigmente ohne Zusatzstoffe können gemäß der EP 154919 A1 dadurch erhalten werden, dass nadelförmiges α-FeOOH bestimmter Teilchengröße und Oberfläche und Zinkoxid bestimmter Oberfläche eingesetzt werden. "Farbreine" oder auch "gesättigte" Farben sind die reinen Spektralfarben. Über den Farbstich geht die Entsättigung der Farbe, auch Verweißlichung genannt, bis hin zum reinen Weiß. (Vergleiche zum Beispiel "Vom Punkt zum Bild", F. Bestenreiner, Wichmann Verlag 1988, ISBN 3-87907-164-0 Seite 61.) Farbreine Farbpigmente sind deshalb erwünscht, weil sie für den Endanwender den besseren Farbeindruck des eingefärbten Prüfkörpers vermitteln.

In der JP 5 70 11 829 A wird zur Herstellung hitzebeständiger gelber Zinkferrit-Farbpigmente Titanoxid zugesetzt. Hitzebeständig bedeutet, dass diese Pigmente in Hochtemperaturanwendungen in inerter oder in oxidierender Umgebung (z.B. Keramikanwendungen) mit geringer Beeinträchtigung der färbenden Wirkung und nur unter geringer Änderung des Farbtons eingesetzt werden können.

In T.C. Patton, Pigment Handbook, Vol. 1, Properties and Economics, S. 347 und 348, John Wiley & Sons, New York 1973, werden allgemein die erhaltenen Zinkferrit-Farbpigmente beschrieben.

Da sich die oben genannten Zinkferrit-Farbpigmente durch hervorragende Licht- und Wetterbeständigkeit sowie hohe Hitzebeständigkeit in oxidierender Umgebung, wie zum Beispiel Luft oder Keramiken, auszeichnen, werden sie auch anstelle von weniger hitzebeständigen Mischungen aus Eisenoxidgelb und Eisenoxidrot eingesetzt. Deshalb haben die Zinkferrit-Farbpigmente des Standes der Technik ihre Anwendung zur Einfärbung von Sandgranulaten, Kalksandsteinen, Emails, Keramikglasuren, Einbrennlacken und Kunststoffen gefunden - also vornehmlich in inerten oder oxidierenden Hochtemperanwendungen.

Obwohl die oben genannten Zinkferrit-Farbpigmente bei hohen Temperaturen über 700 °C hergestellt werden, unterliegen sie in verschiedenen Umgebungen, insbesondere bei der Einfärbung in organischen Materialien, unterschiedlich starken Farbveränderungen. Deshalb können sie in diesen Systemen häufig nicht mehr als reduktionsstabil angesehen werden. So zeigt sich bei der Einfärbung von Kunststoffen wie HDPE, dass die Farbtonverschiebung zu dunkleren, schmutzigen Tönen bereits ab etwa 250 °C so deutlich wird, dass eine Einfärbung mit Zinkferrit-Farbpigmenten nicht mehr sinnvoll ist. Dies ist speziell bei der Einfärbung von Kunststoffen der Fall, die höhere Verarbeitungstemperaturen erfordern, wie z.B. Polyamid oder ABS-Kunststoffe. Diese Farbverschiebung, die durch den Wert ΔE* gekennzeichnet wird, wird durch die reduzierende Umgebung in der Kunststoffschmelze hervorgerufen; die Zinkferrit-Farbpigmente sind nicht ausreichend reduktionsstabil. Reduktionsstabilität im Sinne der Anmeldung bedeutet, dass die Farbverschiebung ΔE* der HDPE Probekörper bei Erhöhung der Einarbeitungstemperatur von 200°C auf 300°C maximal 0,7 Einheiten beträgt.

"HDPE" ist eine Kurzbezeichnung (nach DIN 7728, Tl. 1, von Januar 1988, der englischen Bezeichnung. "high density polyethylene" abgeleitet) für unter niedrigem Druck hergestelltes Polyethylen hoher Dichte. Anstelle der Kurzbezeichnung HDPE wird heute zunehmend die Abkürzung PE-HD verwendet. Neben dem konventionellen HDPE mit Molmassen von unter 300 000 g/mol sind für Spezialzwecke höhermolekulare Polyethylene hoher Dichte auf dem Markt, die als "high molecular weight" HMW-HDPE (4 · 104<MR<3 · 105), "extra high molecular weight" (5 · 105<MR<1,5 · 106) u. "ultra-high molecular weight" UHMW-PE (MR>3,1 · 106) bezeichnet werden (Römpp Lexikon Chemie - Version 2.0, Stuttgart/New York: Georg Thieme Verlag 1999).

DE 3 819 626 A1 beschreibt die Herstellung reduktionsstabiler Zinkferrit-Farbpigmente, ein Verfahren zu ihrer Herstellung sowie deren Verwendung. Durch Zugabe einer Lithiumverbindung zu einer Ausgangsmischung von Zinkoxid und Eisenoxid werden Zinkferrit-Farbpigmente hergestellt, die Lithium enthalten. Diese Zinkferrit-Farbpigmente zeigen eine Farbverschiebung ΔE* in HDPE nach DIN 53 772 und DIN 6174 von 2,8 der Proben, die bei 260 °C und bei der tiefstmöglichen Prüftemperatur (=200 °C) als Bezug hergestellt wurden. Verarbeitungstemperaturen von 300 °C ergaben einen ΔE*-Wert von 5,0 Einheiten. Nachteilig an diesen Zinkferrit-Farbpigmente ist jedoch, dass sie zu dunkel sind. Diese Pigmente liegen im Farbton, wenn stöchiometrische Zinkferrite hergestellt werden, jedoch um mehr als 1,5 L* CIELAB Einheiten (gemessen gemäß DIN 6174 in HDPE Probekörper, wo die Probekörper gemäß DIN 53772 vorbereitet worden) in der Helligkeit dunkler und im Farbort circa zwei CIELAB Einheiten blauer (gekennzeichnet durch einen kleineren b*-Wert im CIELAB-Farbsystem) als undotierte Zinkferrit-Farbpigmente.

Der Erfindung lag die Aufgabe zugrunde, Zinkferrit-Farbpigmente bereitzustellen, die bei gleich guter Reduktionsstabilität heller und gelber sind als reduktionsstabile Zinkferrit-Farbpigmente nach dem Stand der Technik.

Diese Aufgabe wurde gelöst durch Zinkferrit-Farbpigmente mit einem Eisengehalt ≤ 66,4 % Gew.-% und einem Lithium-Gehalt von 0,08 bis 0,8 Gew.-% dadurch gekennzeichnet, dass die Zinkferrit-Farbpigmente bei der Einarbeitung in HDPE eine Farbverschiebung ΔE* nach DIN 53772 und DIN 6174 bei 300 °C von < 4,0, bevorzugt von < 3,0, einen L*-Wert in CIELAB-Einheiten, gemessen gemäß DIN 6174, in HDPE Probekörper, wo die Probekörper gemäß DIN 53772 vorbereitet wurden, von > 51, bevorzugt von > 52 und einen b*-Wert in CIELAB-Einheiten, gemessen gemäß DIN 6174, in HDPE Probekörper, wo die Probekörper gemäß DIN 53772 vorbereitet wurden, von > 34, bevorzugt von > 35 aufweisen. Die Methoden zur Bestimmung des Eisen- und Lithiumgehalts sind in den Beispielen angegeben.

Nach dem bisherigen Stand der Technik wird bei Zinkferrit-Farbpigmenten die stöchiometrische Zusammensetzung mit einem Eisengehalt von 66,6 Gew.-% als die farblich optimale Zusammensetzung angenommen. Wenn man jedoch Zinkferrite-Farbpigmente mit einem Eisengehalt von 66,6 Gew.-% mit Lithiumionen dotiert, kommt es zwar zu einer Verbesserung der Reduktionsstabilität, aber auch zu einer deutlichen Verschlechterung der Farbwerte.

Wenn der Eisengehalt aber auf unter 66,6 Gew.-% abgesenkt wird, also ein eisenarmes und damit unterstöchiometrisches Zinkferrit hergestellt wird, zeigt sich überraschender Weise, dass sich der Farbort durch die Dotierung mit mindestens 0,08 Gew.-%, Lithium um mindestens 1,5 CIELAB-Einheiten in der Helligkeit L* und in Gelb-Wert b* jeweils erhöht.

Die Zinkferrit-Farbpigmente weisen vorzugsweise bei der Einarbeitung in HDPE eine Farbverschiebung ΔE* nach DIN 53772 und DIN 6174 bei 260 °C von < 3,0, bevorzugt von < 2,4 auf. Die Methode zur Messung der Farbverschiebung ΔE* ist in den Beispielen angegeben.

Die Methode zur Messung des L*-Wertes ist in den Beispielen angegeben.

Die Methode zur Messung des b*-Wertes ist in den Beispielen angegeben.

Die Erfindung betrifft auch ein Verfahren zur Herstellung von Zinkferrit-Farbpigmenten, dadurch gekennzeichnet, dass einer eine der Zusammensetzung der Zinkferrit-Farbpigmente entsprechenden Ausgangsmischung von Zinkoxid und Eisenoxid enthaltende oder ergebende Rohstoffmischung, -Lösung oder -Suspension entweder
a) vor oder während der Kalzinierung eine oder mehrere Lithiumverbindungen zugegeben wird oder
b) nach der Kalzinierung eine oder mehrere Lithiumverbindungen zugegeben werden und anschließend nochmal kalziniert wird
oder eine Kombination von a) und b).

Als Lithiumverbindungen können im Rahmen der Herstellung der erfindungsgemäßen reduktionsstabilen Zinkferrit-Farbpigmente vorzugsweise Lithiumcarbonat, Lithiumfluorid, Lithiumchlorid, Lithiumoxid, Lithiumhydroxid, Lithiumsulfat, Lithiummnitrat, Lithiumphosphat, Lithiumsilikat, Lithiumtitanat, Lithiumzirkonat, Lithiumferrit, Lithiumzinkat, Lithiumborat, Lithiumaluminat, Lithiumstannat, Lithiumaluminiumsilikat, sowie weitere allgemein bekannte Lithiumsalze oder lithiumsalzhaltige Verbindungen eingesetzt werden.

Aus praktischen Gründen werden bei trockenen Mischungen vorzugsweise Lithiumcarbonat, bei noch zu filtrierenden Suspensionen vorzugsweise schwerlösliche Lithiumverbindungen eingesetzt. Auch lassen sich vorzugsweise natürliche lithiumhaltige Mineralien einsetzen. Ebenso ist vorzugsweise der Zusatz lithiumorganischer Verbindungen möglich.

Ein substantielles wirtschaftlicher Vorteil des erfindungsgemäßen Verfahrens ist darin zu sehen, dass durch den geringen Zusatz an Lithiumverbindungen die Glühtemperatur um 50 - 100 °C erniedrigt werden kann. Dies ist auch von ökologischem Vorteil, da Energie zur Erzeugung der für die Reaktion benötigten Reaktionstemperatur eingespart werden kann.

Die Erfindung betrifft beinhaltet ferner die Verwendung der Zinkferrit-Farbpigmente zur Einfärbung von Erzeugnissen der Farben-, Lack-, Beschichtungs-, Baustoff-, Kunststoff- und Papierindustrie, in Lebensmitteln, in Einbrenn- oder Coil-Coat-Lacken, in Sandgranulaten, Kalksandsteinen, Emails und Keramik-Glasuren und in Produkten der Pharmaindustrie, bevorzugt in Tabletten.

Die geforderte Reduktionsstabilität bei der Einfärbung von Kunststoffen (HDPE) ist für alle Zinkferrit-Pigmente mit einem Eisengehalt ≤ 66,4 Gew.-% gegeben. Die erfindungsgemäßen Zinkferrit-Farbpigmente können deshalb in der kunststoffverarbeitenden Industrie deutlich besser eingesetzt werden, als die Zinkferrit-Farbpigmente des Standes der Technik. Die erfindungsgemäßen Zinkferrit-Farbpigmente eignen sich besonders für die Einarbeitung in Polyamid oder ABS-Kunststoffe. Bei größeren Lithium-Gehalten im Zinkferrit tritt eine überraschend geringe Verschiebung des Pigment-Farbtons zu dunkleren Brauntönen ein, was den Herstellungsprozess deutlich stabiler werden lässt, und damit wirtschaftliche und ökologische Vorteile gegenüber dem Stand der Technik aufweist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Gleiches gilt für alle in der Beschreibung offenbarten Parameter und deren beliebige Kombinationen.

Anhand der nachfolgenden Beispiele wird die Erfindung näher erläutet, ohne das dadurch eine Einschränkung der Erfindung bewirkt werden soll.

### Beispiele

### I. Beschreibung der verwendeten Messmethoden

### A. Bestimmung des Eisengehalts

Der Eisengehalt wurde nach saurem Aufschluss und potentiometrischer Titration gemessen gemäß "Taschenatlas der Analytik", G. Schwedt, Thieme-Verlag 1996, ISBN 3-527-30870-9 S. 50 ff. Die Messmethode hat eine Bestimmungsgenauigkeit von + 0,24 Gew.-%.

### B. Bestimmung des Lithiumgehalts

Der Lithiumgehalt wurde durch Atom-Emissions-Spektroskopie bestimmt (siehe z.B. "Taschenatlas der Analytik", G. Schwedt, Thieme-Verlag 1996, ISBN 3-527-30870-9 S. 94 ff.). Die Messmethode hat eine Bestimmungsgenauigkeit von ± 0,001 Gew.-%.

### C. Reduktionsstabilität / Farbverschiebung

Die Messung der Farbverschiebung in einer reduzierender Umgebung ("Reduktionsstabilität") erfolgt in HDPE nach DIN 53772 von September 1981 durch 1 %ige Pigmentierung in HDPE, wobei die Farbabweichung der Probekörper bei Erhöhung der Einarbeitungstemperatur im Vergleich zur tiefstmöglichen Prüftemperatur von 200°C bestimmt wird. ΔE* wird von den Proben, die bei 300°C, 260°C und 200°C (200°C = tiefstmögliche Prüftemperatur = Bezug) Einarbeitungstemperatur in HDPE hergestellt wurden, nach DIN 6174 von Januar 1979 bestimmt.

Es wurde ein Spektrophotometer ("Farbmessgerät") mit der Messgeometrie d/8 ohne Glanzfalle verwendet. Diese Messgeometrie ist in ISO 7724/2-1984 (E), Punkt 4.1.1, in DIN 5033 Teil 7 (Juli 1983), Punkt 3.2.4 und in DIN 53236 (Januar 1983), Punkt 7.1.1 beschrieben.

Zur Anwendung kam ein SPECTRAFLASH FF 600+ - Messgerät (Datacolor International Corp., USA). Das Farbmessgerät wurde gegen einen weißen, keramischen Arbeitsstandard kalibriert, wie in ISO 7724/2-1984 (E) Punkt 8.3 von Jahr 1984 beschrieben. Die Reflexionsdaten des Arbeitsstandards gegen einen ideal mattweißen Körper sind im Farbmessgerät hinterlegt, so dass nach Kalibrierung mit dem weißen Arbeitsstandard alle Farbmessungen auf den ideal mattweißen Körper bezogen werden. Die Schwarzpunktkalibrierung wurde mit einem schwarzen Hohlkörper des Farbmessgeräteherstellers ausgeführt.

### D. Farbmessung - Messung der L* und b*-Werte

Das Ergebnis der Farbmessung ist ein Reflexionsspektrum. Für die Berechnung von farbmetrischen Größen spielt es keine Rolle, bei welcher Lichtart die Messung erfolgte (außer bei fluoreszierenden Proben). Aus dem Reflexionsspektrum kann jede beliebige farbmetrische Größe berechnet werden. Die farbmetrischen Größen in diesem Fall verwendeten Probekörper werden gemäß der DIN 6174 von Januar 1979 (CIELAB-Werte) berechnet. Unter anderem, wird gemäß der DIN 6174 von die Farbwerte "L*" und "b*" ausgerechnet. Für den Farbeindruck gilt: je positiver b* ist, desto gelbstichiger ist der Prüfkörper und je größer L* ist, desto heller ist der Farbeindruck des Prüfkörpers.

Die Probekörper wurden in HDPE gemäß DIN 53772 von September 1981 (Punkte 7 bis 9.2) vorbereitet.

Eine eventuell vorhandene Glanzfalle ist ausgeschaltet. Die Temperatur von Farbmessgerät und Prüfling betrug ca. 25 °C ± 5 °C.

### II. Beispiele

### A. Beispiel 1

783 g einer homogenisierten wässrigen Suspension, enthaltend 45 g Goethit und 23,7 g Zinkoxid (mit 99,8 Gew.-% ZnO) werden filtriert, der Filterkuchen, enthaltend ca. 32 Gew.-% trockener Feststoff, mit 0,73 g Lithiumcarbonat versetzt, in einem entsprechenden Mischaggregat innig vermischt und bei 850 °C ca. 30 Minuten geglüht. Nach dem Abkühlen wird der 0,2 Gew.-% Lithium enthaltende Klinker gemahlen. Man erhält ein helles, leuchtend gelbbraunes Pigment. Die Analyse des Klinkers ergab nach saurem Aufschluss und potentiometrischer Titration einen Eisengehalt von 63,8%.

Bei der Prüfung des erhaltenen Pigmentes auf Reduktionsstabilität/Farbverschiebung wurde:
- Ein Prüfkörper vorbereitet. Dabei wurde eine Pigmentierung von 1 Gew.-% in HDPE gemäß DIN 53772 vom September 1981 in einem Doppelwellenextruder und in der "Arburg" eingearbeitet.
- Die Farbverschiebung wurde gemäß DIN 6174 von Januar 1979 gemessen. Dabei wurde eine Farbverschiebung von 0,6 ΔE*-Einheiten bei den Proben, die bei 260 °C und bei der tiefstmöglichen Prüftemperatur (= 200 °C) als Bezug hergestellt wurden gemessen. Bei Verarbeitungstemperaturen von 300 °C ergaben sich 1,6 ΔE*-Einheiten. Der Farbort des Produktes ergab bei einer Einarbeitungstemperatur von 200°C eine Helligkeit L* von 52,5 CIELAB Einheiten und einen Gelbstich b* von 36,1 CIELAB Einheiten.

### B. Beispiel 1 - Vergleich

Analog zu Beispiel 1, aber ohne Lithiumzusatz wurden folgende Eigenschaften gefunden:
Bei der Prüfung des erhaltenen Pigmentes auf Reduktionsstabilität/Farbverschiebung wurde:
- Ein Prüfkörper vorbereitet. Dabei wurde eine Pigmentierung von 1 Gew.-% in HDPE gemäß DIN 53772 vom September 1981 in einem Doppelwellenextruder und in der "Arburg" eingearbeitet.
- Die Farbverschiebung wurde gemäß DIN 6174 von Januar 1979gemessen. Dabei wurde eine Farbverschiebung von 0,6 ΔE*-Einheiten bei den Proben, die bei 260 °C und bei der tiefstmöglichen Prüftemperatur (= 200 °C) als Bezug hergestellt wurden. Bei Verarbeitungstemperaturen von 300 °C ergaben sich 1,6 ΔE*-Einheiten. Der Farbort des Produktes ergab bei einer Einarbeitungstemperatur von 200°C eine Helligkeit L* von 50,8 CIELAB Einheiten und einen Gelbstich b* von 33,3 CIELAB Einheiten.

### C. Beispiel 2

783 g einer homogenisierten wässrigen Suspension, enthaltend 45 g Goethit und 23,7 g Zinkoxid (mit 99,8 Gew.-% ZnO) werden filtriert, der Filterkuchen, enthaltend ca. 32 Gew.-% trockener Feststoff, mit 1,46 g Lithiumcarbonat versetzt, in einem entsprechenden Mischaggregat innig vermischt und bei 850 °C ca. 30 Minuten geglüht. Nach dem Abkühlen wird der 0,4 Gew.-% Lithium enthaltende Klinker gemahlen. Man erhält ein helles, leuchtend gelbbraunes Pigment. Die Analyse des Klinkers ergab nach saurem Aufschluss und potentiometrischer Titration einen Eisengehalt von 63,4%.

Bei der Prüfung des erhaltenen Pigmentes auf Reduktionsstabilität/Farbverschiebung wurde:
- Ein Prüfkörper vorbereitet. Dabei wurde eine Pigmentierung von 1 Gew.-% in HDPE gemäß DIN 53772 vom September 1981 in einem Doppelwellenextruder und in der "Arburg" eingearbeitet.
- Die Farbverschiebung wurde gemäß DIN 6174 von Januar 1979 gemessen. Dabei wurde eine Farbverschiebung von 1,0 ΔE*-Einheiten bei den Proben, die bei 260 °C und bei der tiefstmöglichen Prüftemperatur (= 200 °C) als Bezug hergestellt wurden gemessen. Bei Verarbeitungstemperaturen von 300 °C ergaben sich 2,4 ΔE*-Einheiten. Der Farbort des Produktes ergab bei einer Einarbeitungstemperatur von 200°C eine Helligkeit L* von 52,4 CIELAB Einheiten und einen Gelbstich b* von 35,8 CIELAB Einheiten.

### D. Vergleichsbeispiel 3

783 g einer homogenisierten wässrigen Suspension, enthaltend 45 g Goethit und 20,7 g Zinkoxid (mit 99,8 Gew.-% ZnO) werden filtriert, der Filterkuchen, enthaltend ca. 32 Gew.-% trockener Feststoff, mit 0,7 g Lithiumcarbonat versetzt, in einem entsprechenden Mischaggregat innig vermischt und bei 850 °C ca. 30 Minuten geglüht. Nach dem Abkühlen wird der 0,2 Gew.-% Lithium enthaltende Klinker gemahlen. Man erhält ein helles, leuchtend gelbbraunes Pigment. Die Analyse des Klinkers ergab nach saurem Aufschluss und potentiometrischer Titration einen Eisengehalt von 67,3%.

Bei der Prüfung des erhaltenen Pigmentes auf Reduktionsstabilität/Farbverschiebung wurde:
- Ein Prüfkörper vorbereitet. Dabei wurde eine Pigmentierung von 1 Gew.-% in HDPE gemäß DIN 53772 vom September 1981 in einem Doppelwellenextruder und in der "Arburg" eingearbeitet.
- Die Farbverschiebung wurde gemäß DIN 6174 von Januar 1979 gemessen. Dabei wurde eine Farbverschiebung von 2,5 ΔE-*-Einheiten bei den Proben, die bei 260 °C und bei der tiefstmöglichen Prüftemperatur (= 200 °C) als Bezug hergestellt wurden gemessen. Bei Verarbeitungstemperaturen von 300 °C ergaben sich 4,1 ΔE*-Einheiten. Der Farbort des Produktes ergab bei einer Einarbeitungstemperatur von 200°C eine Helligkeit L* von 50,5 CIELAB Einheiten und einen Gelbstich b* von 33,7 CIELAB Einheiten.

**Tabelle 1**

| | Eisengehalt Gew.-% | Lithiumgehalt Gew.-% | ΔE* bei 260 °C | ΔE* bei 300 °C | L*-Wert CIELAB Einheiten | b*-Wert CIELAB Einheiten |
|---|---|---|---|---|---|---|
| Beispiel 1 | 63,8 | 0,2 | 0,6 | 1,6 | 52,5 | 36,1 |
| Beispiel 1 - Vergleich | 64,3 | < 0,001* | 0,6 | 1,6 | 50,8* | 33,3* |
| Beispiel 2 | 63,4 | 0,4 | 1,0 | 2,4 | 52,4 | 35,8 |
| Beispiel 3 - Vergleich | 67,3* | 0,2 | 2,5 | 4,1* | 50,5* | 33,7* |
| Bayferrox® 3950 der Firma Bayer | 66,7* | < 0,001* | 10,3* | -- | 54,6 | 41,0 |
| TAN® 10 der Firma Mapico | 66,8* | < 0,001* | 5,9* | -- | 52,9 | 37,5 |

| | | | | | | |
|---|---|---|---|---|---|---|
| * = Eigenschaft genügt nicht den Anforderungen. | | | | | | |

## Patentansprüche

1. Zinkferrit-Farbpigmente mit einem Eisengehalt ≤ 66,4 Gew.-% und einem Lithium-Gehalt von 0,08 bis 0,8 Gew.-%, **dadurch gekennzeichnet, dass** die Zinkferrit-Farbpigmente bei der Einarbeitung in HDPE eine Farbverschiebung ΔE* nach DIN 53772 und DIN 6174 bei 300 °C von < 4,0, einen L*-Wert in CIELAB-Einheiten, gemessen gemäß DIN 6174 in HDPE Probekörpern, wo die Probekörper gemäß DIN 53772 vorbereitet wurden, von > 51 und einen b*-Wert in CIELAB-Einheiten, gemessen gemäß DIN 6174 in HDPE Probekörpern, wo die Probekörper gemäß DIN 53772 vorbereitet wurden, von > 34 aufweisen.

2. Zinkferrit-Farbpigmente nach Anspruch 1, **dadurch gekennzeichnet, dass** die Zinkferrit-Farbpigmente bei der Einarbeitung in HDPE eine Farbverschiebung ΔE* nach DIN 53772 und DIN 6174 bei 300 °C von < 3,0 aufweisen.

3. Zinkferrit-Farbpigmente nach Ansprüchen 1 und 2, **dadurch gekennzeichnet, dass** die Zinkferrit-Farbpigmente bei der Einarbeitung in HDPE eine Farbverschiebung ΔE* nach DIN 53772 und DIN 6174 bei 260 °C von < 3,0, insbesondere von < 2,4 aufweisen.

4. Zinkferrit-Farbpigmente nach einem oder mehreren der Ansprüche 1 bis 3, **dadurch gekennzeichnet, dass** die Zinkferrit-Farbpigmente einen L*-Wert in CIELAB-Einheiten, gemessen gemäß DIN 6174 in HDPE Probekörpern, wo die Probekörper gemäß DIN 53772 vorbereitet wurden, von > 52 aufweisen.

5. Zinkferrit-Farbpigmente nach einem oder mehreren der Ansprüche 1 bis 4, **dadurch gekennzeichnet, dass** die Zinkferrit-Farbpigmente einen b*-Wert in CIELAB-Einheiten, gemessen gemäß DIN 6174 in HDPE Probekörpern, wo die Probekörper gemäß DIN 53772 vorbereitet wurden, von > 35 aufweisen.

6. Verfahren zur Herstellung von Zinkferrit-Farbpigmenten nach einem oder mehreren der Ansprüche 1 bis 5, **dadurch gekennzeichnet, dass** einer eine der Zusammensetzung der Zinkferrit-Farbpigmente entsprechenden Ausgangsmischung von Zinkoxid und Eisenoxid enthaltende oder ergebende Rohstoffmischung, -Lösung oder -Suspension entweder
a) vor oder während der Kalzinierung eine oder mehrere Lithiumverbindungen zugegeben wird oder
b) nach der Kalzinierung eine oder mehrere Lithiumverbindungen zugegeben werden und anschließend nochmal kalziniert wird
oder eine Kombination von a) und b).

7. Verwendung der Zinkferrit-Farbpigmente nach einem oder mehreren der Ansprüche 1 bis 5 sowie Zinkferrit-Farbpigmente, erhältlich gemäß Anspruch 6 zur Einfärbung von Erzeugnissen der Farben-, Lack-, Beschichtungs-, Baustoff-, Kunststoff- und Papierindustrie, in Lebensmitteln, Einbrenn- oder Coil-Coat-Lacken, in Sandgranulaten, Kalksandsteinen, Emails und Keramik-Glasuren und in Produkten der Pharmaindustrie, insbesondere in Tabletten.

## Claims

1. Zinc ferrite pigments having an iron content ≤ 66.4% by weight and a lithium content of 0.08% to 0.8% by weight, **characterized in that** when incorporated into HDPE the zinc ferrite pigments exhibit a colour shift ΔE* to DIN 53772 and DIN 6174 at 300°C of < 4,0, in HDPE sample specimens prepared in accordance with DIN 53772 the zinc ferrite pigments exhibit an L* value in CIELAB units, measured in accordance with DIN 6174, of > 51 and in HDPE sample specimens prepared in accordance with DIN 53772 the zinc ferrite pigments exhibit a b* value in CIELAB units, measured in accordance with DIN 6174, of > 34.

2. Zinc ferrite pigments according to Claim 1, **characterized in that** when incorporated into HDPE the zinc ferrite pigments exhibit a colour shift ΔE* to DIN 53772 and DIN 6174 at 300°C of < 3.0.

3. Zinc ferrite pigments according to Claims 1 and 2, **characterized in that** when incorporated into HDPE the zinc ferrite pigments exhibit a colour shift ΔE* to DIN 53772 and DIN 6174 at 260°C of < 3.0, in particular of < 2.4.

4. Zinc ferrite pigments according to one or more of Claims 1 to 3, **characterized in that** in HDPE sample specimens prepared in accordance with DIN 53772 the zinc ferrite pigments exhibit an L* value in CIELAB units, measured in accordance with DIN 6174, of > 52.

5. Zinc ferrite pigments according to one or more of Claims 1 to 4, **characterized in that** in HDPE sample specimens prepared in accordance with DIN 53772 the zinc ferrite pigments exhibit a b* value in CIELAB units, measured in accordance with DIN 6174, of > 35.

6. Process for producing zinc ferrite pigments according to one or more of Claims 1 to 5, **characterized in that** a raw material mixture, solution or suspension which produces or comprises an initial mixture of zinc oxide and iron oxide that corresponds to the composition of the zinc ferrite pigments is either
a) admixed before or during calcining with one or more lithium compounds, or
b) admixed after calcining with one or more lithium compounds and then calcined again,
or a combination of a) and b).

7. Use of the zinc ferrite pigments according to one or more of Claims 1 to 5 and also of zinc ferrite pigments obtainable according to Claim 6 for colouring products of the ink, paint, coating, building material, plastic and paper industries, in foods, in baking varnishes or coil coatings, in sand granules, sand-lime bricks, enamels and ceramic glazes and in products of the pharmaceutical industry, particularly in tablets.

## Revendications

1. Pigments colorés de ferrite de zinc comportant une teneur en fer ≤ 66,4 % en poids et une teneur en lithium de 0,08 à 0,8 % en poids, **caractérisés en ce que** les pigments colorés de ferrite de zinc présentent lors de l'incorporation dans du PEHD une variation chromatique ΔE* d'après la norme DIN 53772 et la norme DIN 6174 à 300 °C de < 4,0, une valeur de L* en unités CIELAB, mesurée selon la norme DIN 6174 dans des éprouvettes de PEHD, où les éprouvettes ont été préparées selon la norme DIN 53772, de > 51 et une valeur b* en unités CIELAB, mesurée selon la norme DIN 6174 dans des éprouvettes de PEHD, où les éprouvettes ont été préparées selon la norme DIN 53772, de > 34.

2. Pigments colorés de ferrite de zinc selon la revendication 1, **caractérisés en ce que** les pigments colorés de ferrite de zinc présentent lors de l'incorporation dans du PEHD une variation chromatique ΔE* d'après la norme DIN 53772 et la norme DIN 6174 à 300 °C de < 3,0.

3. Pigments colorés de ferrite de zinc selon les revendications 1 et 2, **caractérisés en ce que** les pigments colorés de ferrite de zinc présentent lors de l'incorporation dans du PEHD une variation chromatique ΔE* d'après la norme DIN 53772 et la norme DIN 6174 à 260 °C de < 3,0, en particulier de < 2,4.

4. Pigments colorés de ferrite de zinc selon l'une ou plusieurs des revendications 1 à 3, **caractérisés en ce que** les pigments colorés de ferrite de zinc présentent une valeur de L* en unités CIELAB, mesurée selon la norme DIN 6174 dans des éprouvettes de PEHD, où les éprouvettes ont été préparées selon la norme DIN 53772, de > 52.

5. Pigments colorés de ferrite de zinc selon l'une ou plusieurs des revendications 1 à 4, **caractérisés en ce que** les pigments colorés de ferrite de zinc présentent une valeur de b* en unités CIELAB, mesurée selon la norme DIN 6174 dans des éprouvettes de PEHD, où les éprouvettes ont été préparées selon la norme DIN 53772, de > 35.

6. Procédé pour la préparation de pigments colorés de ferrite de zinc selon l'une ou plusieurs des revendications 1 à 5, **caractérisé en ce qu'**à un mélange, une solution ou une suspension de matières premières contenant ou résultant d'un mélange de départ contenant de l'oxyde de zinc et de l'oxyde de fer correspondant à la composition des pigments colorés de ferrite de zinc, soit
a) on ajoute un ou plusieurs composés de lithium avant ou pendant la calcination
b) soit on ajoute un ou plusieurs composés de lithium après la calcination et on calcine ensuite à nouveau
soit on effectue une combinaison de a) et b).

7. Utilisation de pigments colorés de ferrite de zinc selon l'une ou plusieurs des revendications 1 à 5 ainsi que des pigments colorés de ferrite de zinc pouvant être obtenus selon la revendication 6 pour la coloration de produits de l'industrie des colorants, des vernis, des revêtements, des produits de construction, du plastique et du papier, dans des produits alimentaires, dans des vernis à cuire ou des prélaques, dans des granules de sable, dans des grès calcaires, dans des émaux et des glaçures de céramique et dans des produits de l'industrie pharmaceutique, en particulier dans des comprimés.
